# EUROPEAN PATENT SPECIFICATION

(11) **EP 4 624 142 B1**
(45) Date of publication and mention of the grant of the patent: **05.08.2026**
(21) Application number: 24305467.3
(22) Date of filing: 28.03.2024
(51) Int. Cl.: B29C 70/48, B29D 99/00, B64C 11/26, F03D 1/06, B29C 65/70, B29L 31/08, B64C 27/473

(54) **ROTARY BLADE**
ROTIERENDES BLATT
LAME ROTATIVE

(43) Date of publication of application: 01.10.2025
(73) Proprietor: Ratier-Figeac SAS, 46101 Figeac Cedex (FR)
(72) Inventor: SEMINEL, Bruno, 46100 Figeac (FR)
(74) Representative: Dehns

(56) References cited:
- SHENNAN CHRIS: "Prepreg and Infusion: Processes for Modern Wind Turbine Blades", 5 September 2013 (2013-09-05), pages 1 - 54, XP093195923, Retrieved from the Internet <URL:https://www.hexcel.com/innovation/Documents/Prepreg%20and%20Infusion%20%20Processes%20for%20Modern%20Wind%20Turbine%20Blades%20.pdf> [retrieved on 20240816]
- N. N.: "HexPly M79 / M79-LT Low Temperature Curing Epoxy Resin Matrix for Prepregs", 31 December 2017 (2017-12-31), pages 1 - 4, XP093196482, Retrieved from the Internet <URL:https://fileserver.mates.it/Prodotti/1_Rinforzi/TDS/_Prepreg/HexPly/HexPly_M79M79LT_DataSheet.pdf> [retrieved on 20240819]
- N. N.: "EPIKOTE(TM) Resin MGS(TM) RIMR 135 and EPIKURE(TM) Curing Agent MGS(TM) RIMH 134-RIMH 137", 23 March 2015 (2015-03-23), pages 1 - 9, XP093196487, Retrieved from the Internet <URL:https://www.metyx.com/wp-content/uploads/PDF_Files/Hexion/TDS/TDS%20RIMH%20137.pdf> [retrieved on 20240819]
- KAPS ROBERT: "Kombinierte Prepreg-und Infusionstechnologie für integrale Faserverbundstrukturen", 29 November 2010 (2010-11-29), Braunschweig, pages 1 - 186, XP093196495, Retrieved from the Internet <URL:https://www.researchgate.net/publication/259897248_Kombinierte_Prepreg-_und_Infusionstechnologie_fur_integrale_Faserverbundstrukturen> [retrieved on 20240819]

## Description

The present disclosure relates to a rotary blade for a flying vehicle and a method of making such a blade.

Many aircraft or flying vehicles such as airplanes, helicopters, unmanned aerial vehicles, vertical-take-off-and landing vehicles, drones etc. use composite blades, often in a propeller, rotor or fan. Such blades are highly loaded structural components as the propeller, rotor fan rotates during operation of the aircraft. These blades need to resist: centrifugal loads, aerodynamic loads, and impacts due to flying objects such as birds, stones etc.

Composite blades include fibre-reinforced composite (FRC) materials, and may include other materials such as a foam core and/or a metal root for connecting the blade to a hub. FRC materials include (high-strength) fibres embedded in a matrix. Composite blades are often preferred over metal blades, as FRC blades can provide lighter weight blades while maintaining sufficient strength and stiffness for use in a propeller or fan. In composite blades, it is typical to use epoxy (i.e. a thermoset polymer) for the matrix. Weight to strength ratio of such blades has been improved by the use of carbon spars or beams encased in a thermoset resin. A number of thermoset polymers are sufficiently strong and creep-resistant to work as composite blades. A disadvantage of thermoset composites is that, once set, the shape is fixed. If there is a manufacturing defect, a whole blade may need to be scrapped and cannot be recycled due to the irreversible nature of the thermosetting process. Furthermore, making blades using such thermoset resins requires a long cure time and a relatively expensive and time intensive procedure that needs to be precisely controlled. Often, the impact strength of such materials may be a limiting factor for the potential conditions aircraft may face. Combining prepreg and infusion processes for forming wind turbine blades is known from Shennan Chris: "Prepreg and Infusion: Processes for Modern Wind Turbine Blades", HEXCEL, XP093195923.

There is a desire for stronger, but still light blade structures that can be more easily, quickly and efficiently manufactured.

According to a first aspect, there is provided a rotary blade for a flying vehicle, the blade comprising one or more structural beams extending generally in a direction from a root end of the blade to a tip of the blade, a shell enclosing the one or more structural beams and defining the outer shape of the blade, and a filler material within the shell and encasing the one or more structural beams, wherein the one or more structural beams is made of a thermoplastic material with reinforcement fibers and the shell comprises a fibrous material, the blade further comprising a thermoset resin injected and set around fibers of the shell fibrous material and around the one or more beams.

The reinforcement fibers may be e.g. carbon fibers, glass, aramide or any known fibers for FRC.

According to another aspect, there is provided a method of forming an aircraft blade, the method comprising: forming one or more structural beams of the blade made of a thermoplastic material; combining the one or more beams, with a core of filler material to produce an assembly; applying a fibre shell over the assembly; and performing Resin Transfer Molding, RTM, on the assembly in the fiber shell, wherein the RTM includes injecting a thermoset resin into the shell and the assembly and solidifying the resin, to produce the finished aircraft blade.

Certain embodiments of the present disclosure will now be described in greater detail by way of example only and with reference to the accompanying drawings in which:
Figure 1 shows a cross section of an aircraft blade having a known structure;
Figure 2 shows a perspective view of two parts of a blade according to this disclosure;
Figure 3 shows a cross section of further parts of a blade according to the disclosure; and
Figure 4 shows a flowchart depicting a method of making a blade according to the disclosure.

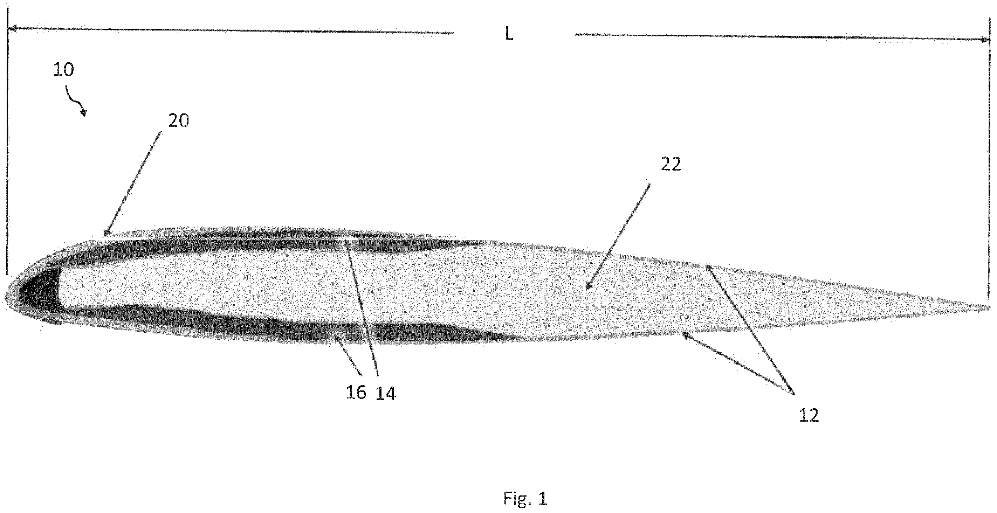

Figure 1 shows, by way of background, a cross-section of a blade 10 for an aircraft. By way of example only, the blade 10 may be suitable for use in a fan of a gas turbine engine or in a propeller or a helicopter rotor.

The blade 10 comprises a fibre shell 12 that encloses first 14 and second 16 beams. The first beam 14 is located adjacent the suction-side of the blade 10, immediately inward from the fibre shell 12. The second beam 16 is located on the pressure-side of the blade 10, immediately inward from the fibre shell 12.

A leading edge sheath 20 may be located on an outward side of the fibre shell 12, spanning from the pressure side, around the leading edge of the blade 10, and to the suction side. The leading edge sheath may provide improved impact resistance to the blade 10 in the area most susceptible to impacts from e.g. ingested debris.

A core 22 is provided inside the fibre shell 12 and between the first and second beams 14,16.

In known blade structures, the beams 14, 16 are usually made of a carbon composite material. The space between the beams is filled with a filler such as foam or a honeycomb structure material, to form the blade core and the structure is encased in the shell 12.

As mentioned above, however, thermoset resins or epoxy have a relatively long cure cycle and have a fairly low impact strength which may, to satisfy the needs of an aircraft, lead to oversizing the beams. This results in increased weight and cost. Furthermore, the setting process in not reversible and so in case of damage or wear of parts of the blade, the entire blade needs to be replaced.

In recent years, there is an ongoing move, particularly in the aerospace industry, from thermoset resins to thermoplastic resins. Thermoplastic resins have a shorter processing cycle and so manufacturing processes are faster. Thermoplastics also exhibit greater impact strength than thermoset resins. In addition, parts made of thermoplastic materials can be repaired in that the material can be melted and other components can be repaired or replaced.

On the other hand, such thermoplastic materials have very high processing temperatures in the region of 400 deg. C and known core materials and other materials used in conventional blades are often not compatible with such temperatures. A further challenge occurs if metal parts are used in combination with the thermoplastic material, since thermal stresses may not be manageable. In addition, the tempering temperature of the metal material maybe too low for some potential materials, leading to degradation of their mechanical properties.

The present disclosure makes use of thermoplastic FRC materials to make the spars or beams that form the main structural elements of the blade. These will provide a high strength to weight ratio and high impact strength. Further, the beams can, potentially, be repaired and used to make a new blade.

The strength of the blade is maximized by use of a core material between and around the beams through which a thermoset resin is injected and sets around the beams and also around fibers of the fiber shell forming the exterior of the blade. Resin Transfer Molding (RTM) of the thermoset resin can also provide adhesion of the shell to the beams to improve the structure. In some examples, the surface of the beam may be treated or surface-activated e.g. by sanding, plasma treatment, laser treatment etc. to promote adhesion.

Metal components such as a weight and/or a blade root for attaching the blade to a hub, can also be incorporated into the blade structure.

In one example, the structure of the blade may be similar to that shown in Fig. 1, but the beams are made of thermoplastic material. The filler may be made e.g. of polyurethane foam or other filler material. If desired, although this is optional, a weight may be incorporated into the blade structure and/or a metal blade root may be integrated into the structure.

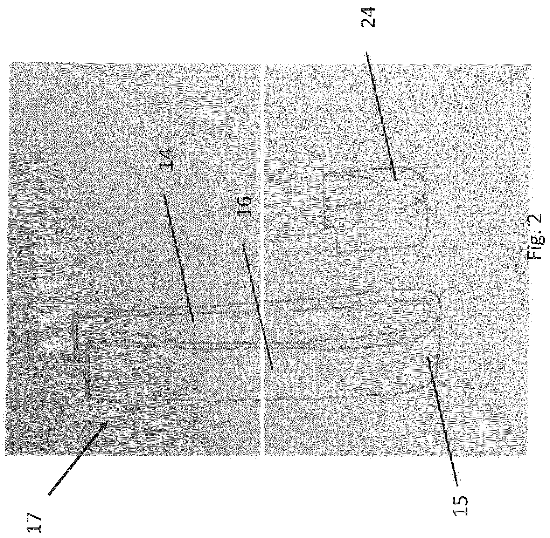

In another example, the beam structure may be formed as shown in Fig. 2, in a U-shape, thus forming effectively two beams produced as a single component.

In an alternative embodiment (not shown), there may be only a single solid beam (e.g. first beam).

The resulting blade structure in any example may be solid (containing the beams and filler material) or may, instead, be hollow by removing the filler (e.g. chemically or mechanically) after the RTM process.

The beam(s) may be made from a unidirectional fibre thermoplastic composite material or a mixture of fibres at different angles. The fibres of said composite may be carbon fibres. However, other fibres having sufficiently high strength and/or Young's modulus may be used, including aramid fibres or glass fibres. The fibres extend along an axis from a root of the blade 10 to a tip of the blade 10. The fibres of the beam 14, 16 may thereby provide good longitudinal and bending stiffness and strength to the overall blade 10.

As shown in Figure 2, the first and second beams 14,16 may be formed as a single U-shaped piece 17 of FRC thermoplastic material. The two "legs" of the U-shape respectively form the first 14 and second beams 16 and these legs join together at a curved base portion 15 in order to provide an attachment loop providing a strong structural member to react to G-forces.

A root insert 24 may be placed between the two beams 14,16, at the curved base portion 15. The root insert 24 may be made from a FRC thermoplastic material. The root insert material may have either short or long/continuous fibres. As used in the art of FRC materials, "short fibres" typically refers to fibres less than 1mm long. Correspondingly, "long fibres" are longer than 1mm and may even be continuous throughout the entire length of a given FRC component. The root insert may be made by other processes e.g. injection molding, forged carbon machining, laid-up fibers etc.

During manufacture, the U-shaped piece 17 may be pre-formed and then assembled together with the root insert 24. The two parts 17,24 may then be welded together, e.g. by local or global heating of the two parts. If both parts 17,24 use a thermoplastic as the matrix, the two (solid) parts 17 24 may be placed together and their thermoplastics can then be (partially) remelted in the welding process so as to weld the parts 17,24 together.

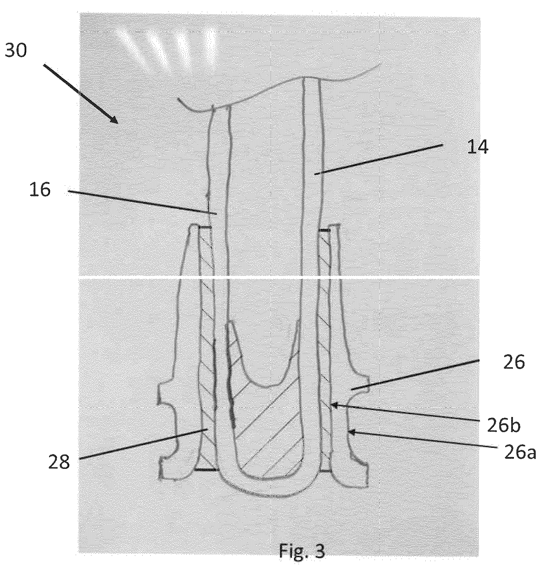

As shown in Figure 3, the U-shaped piece 17 and the root insert 24 may then be inserted into a sleeve 26. The sleeve 26 may be metal and may be made of steel. The sleeve 26 may have one or more hardened ball races 26a for abutting against ball bearings in a bearing (not shown). Such a bearing may be used to allow the blade 10 to rotate to change pitch. Other types and arrangements of bearings may also be used, or designs without bearings are also contemplated.

The sleeve may be shaped such that its inner diameter fits the outer shape and diameter of the beam. There may be a gap between the inner diameter of the sleeve 26 and the outer surface of the U-shaped piece 17. This gap may be filled with dry plies of fibres 28. These dry plies may be formed as a sock that is slid over the U-shaped piece 17 and the U-shaped piece and sock are inserted together into the sleeve 26.

A shell 12 of dry fibers, e.g. carbon fibers, Aramid, glass or other fibers, which may be braided to form the shell 12 is provided around the one or more beams.

The shell 12 is filled with a filler material around the one or more beams. The filler material forms a core 22 of the blade inside the outer shell 12. The filler material may be a foam material, e.g. a polyurethane foam.

Resin Transfer Molding (RTM) is employed as a final or nearly-final step of the manufacturing process, such that the dry plies of fibres 28 of the sleeve (where present) or and the fibre shell 12, become impregnated with a matrix material and the resin acts as an adhesive between the core 22 and shell 12 and, optionally, between the core and the beam(s). This provides a hard and robust shell capable of withstanding large impact and a strong core and structure to the blade. As such, neither of these parts is "dry" in the finished blade 10, even though they are "dry" when initially added as part of the blade during construction.

Optionally, the U-shaped part may have a quasi-cylindrical outer profile in the portion of the U-shaped piece that is enclosed by the sleeve 26. This may generally match with a cylindrical profile of the inner surface 26b of the sleeve 26. Outside said region, the beams 14,16 (as portions of the U-shaped piece 17) may have different cross-sectional shapes. For example, the beams 14,16 may, in this region, act to define a portion of the airfoil cross=sectional profile of the finished blade, e.g. as shown in Figure 1.

Optionally, the sleeve 26 may have a conical inner surface 26b to provide a mechanical connection holding the U-shaped piece 17 and the dry plies 28 within the sleeve 26.

The finished blade 10 may therefore have the following construction:
The sleeve 26 is located towards a base end of the blade 10 and may act as the root of the blade 10 where it is connected to a hub (e.g. fan hub or propeller hum). The first and second beams 14,16 are connected to the sleeve 26 via the plies of fibres 28, once impregnated with a matrix. The first and second beams 14,16 extend away from the base end of the blade 10 towards a tip end of the blade 10. The core 22 connects to the first and second beams 14,16, and the fibre shell 12 generally encapsulates the core 22 and beams 14,16 . This arrangement is subjected to RTM to incorporate a matrix material within the fibre shell 12 and among the plies 28 of dry fibres, with the RTM creating a strong holding force or adhesion between the shell and the beam(s). The leading edge sheath 20, if present, is then connected to the outer surface of the fibre shell 12.

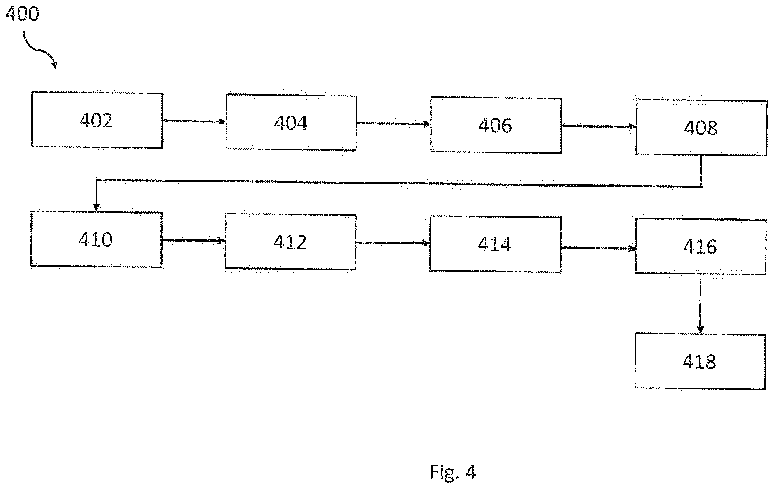

A method 400 of constructing the blade 10 will now be described with reference to Figure 4.

At step 402, the one or more beams 14,16 are formed. In the example shown in Figure 2, these two beams are formed as a single U-shaped piece 17, but the beams may have any known form and structure. The beam may be formed by preparing a layup of multiple layers of unidirectional dry carbon fibres in a mold, the mold having the shape of the finished piece/beam(s). This mold may therefore be termed a beam mold, to differentiate it from other mold(s) used in this method. Each layer may be unidirectional (i.e all the fibres of that layer are axially aligned with one another), but the fibres of on layer within the layup may be angled relative to the (unidirectional) fibres of another layer in the layup. A liquid thermoplastic is then injected into the beam mold such that it flows among the fibres. The liquid thermoplastic is then solidified, such that the finished beams/U-shaped piece is formed of a fibre reinforced thermoplastic material. In embodiments, the finished blade 10 has only a single beam....

At step 404, the root insert 24 may be formed. This may be done by preparing a mold, and a liquid thermoplastic mixed with fibers is injected into the mold. This may be termed an insert mold. The thermoplastic may then be cooled to produce the (solid) root insert 24. Other ways of manufacturing a root insert 24, where required, are also possible.

At step 406, the root insert 24 is placed into the curved base portion 15 of the U-shaped piece 17 and these pieces are heated (either locally or globally) to weld the root insert 24 to the U-shaped piece 17.

Steps 402 and 404 may be performed in reverse order or in parallel. That is, the root insert 24 may be formed before or at the same time as the U-shaped piece 17 is formed. Alternatively, steps 402 and 404 may be replaced with a single step in which the fibres for the U-shaped piece 17 and fibres for the root insert are both placed into a mold (called a beam-and-insert mold) and then a thermoplastic resin is injected into, or provided as a powder on the beam-and-insert mold to form the root insert 24 and U-shaped piece 17 as a single unit.

At step 408, the dry plies of fibres 28 are placed around a portion of the one or more beams. In the example shown in Figure 2, the dry plies of fibres are placed around the U-shaped piece 17, near the curved base portion 15.

At step 410, the one or more beams (e.g. U-shaped piece 17), root insert 24, and dry plies of fibres 28 are inserted into the sleeve 26, such that the dry plies of fibres abut the inner surface 26b of the sleeve 26. Alternatively, an epoxy adhesive may be applied on the inner surface 26b of the sleeve 26 before the other parts are inserted thereinto. The adhesive may then help with final strength of the bonding between the sleeve and the beam(s).

The unit comprising the U-shaped piece 17, root insert 24, dry plies of fibres 28 and the sleeve 26, and epoxy adhesive (if any) may generally referred to as piece 30.

At step 412, the piece 30 is combined with the core 22. This may be done in one of two ways.

The first method is to place the piece 30 into mold. The mold has substantially the shape of the finished blade 10. The inner shape of this mold is slightly smaller than the finished blade 10 (in view of the later addition of the fibre shell and subsequent molding, as discussed below). A core material is then injected in liquid form into the blade mold and then solidified to form the core 22. For example, the core 22 may be made from a polyurethane foam material. The piece 30 and core 22 may be considered an assembly that has substantially the shape of the finished blade 10.

In the second, alternative, method, the core 22 is preformed as an already-solid piece that is shaped (or machined into shape) to fit with the beams 14,16, such that the resulting assembly has substantially the shape of the finished blade 10.

At step 414, the fibre shell 12 is formed around the assembly. This may be done in a number of ways. In one example, the fibre shell 12 is pre-formed as a sock that is then pulled over the assembly. In another example, the assembly forms a mandrel and the fibres of the fibre shell 12 are braided or wrapped around the mandrel/assembly to form the fibre shell 12.

Steps 402,404 may be performed in parallel with forming a preformed core 22, and with preformed fibre shell 12 (e.g. as a sock). Being able to perform a number of the steps in parallel may speed up the overall manufacturing process.

At step 416, a Resin Transfer Molding (RTM) process is used. The assembly and fibre shell 12 are placed into a mold (called a blade mold) and thermoset resin is injected into the blade mold. The resin flows into the dry plies of fibres 28 and, once set, securely bonds the U-shaped piece 17 to the sleeve 26. The resin also flows among the fibres of the fibre shell 12, such that the fibre shell 12 of the finished blade 10 is a FRC thermoset material.

During RTM, the resin flows into any available gaps and spaces. For example, the resin may flow into gaps between the beams 14,16 and the core 22. The thermoset resin thereby helps to bind together the components of the blade 10, particularly the shell and the beam(s).

At optional step 418, the leading edge sheath 20 is applied over the fibre shell, at the leading edge of the blade 10. In this alternative, the finished blade 10 further comprises the leading edge sheath 20.

As discussed above, having the one or more beams made of thermoplastic material has many advantages including that the beam(s) can, in contrast to known blade designs, be repaired. Such materials also have high impact strength which is advantageous in flying vehicle blades which may e.g. experience bird strikes or the like. Having the beam(s) made of this strong thermoplastic material and manufactured as isolated part(s), means that the core, shell and metal sleeve can be made of other materials that do not necessarily withstand such high processing temperatures. The beam(s) can be formed first and then located in e.g. a mold and assembled with the core and the shell, forming an assembly that is then finished using RTM, as described above.

### List of References

- 10: (aircraft) blade
- 12: fibre shell
- 14: first beam
- 15: curved base portion
- 16: second beam
- 17: U-shaped piece
- 20: leading edge sheath
- 22: core
- 24: root insert
- 26: (metal) sleeve
- 26a: hardened ball race
- 26b: inner surface
- 28: dry plies of fibre
- 30: piece
- 400: method of construction
- 402: forming one or more beams
- 404: forming the root insert
- 406: combining the root insert and one or more beams
- 408: placing dry fibres around a portion of the one or more beams
- 410: placing the dry fibres, one or more beams, and root insert into a sleeve
- 412: combining the piece with a core to make an assembly
- 414: forming the fibre shell around the assembly
- 416: Resin Transfer Molding the assembly with a thermoset material
- 418: applying the leading edge sheath

## Claims

1. A rotary blade, the blade comprising one or more structural beams (14, 16) extending generally in a direction from a root end of the blade to a tip of the blade, a shell (12) enclosing the one or more structural beams and defining the outer shape of the blade, wherein the one or more structural beams is made of a thermoplastic material and the shell comprises a fibrous material, the blade further comprising a thermoset resin injected into the shell fibrous material to strengthen the shell and also to bond the shell to the one or more beams.

2. The blade of claim 1, wherein the one or more beams comprise a fiber reinforced composite including a thermoplastic material and reinforcing fibers.

3. The blade of claim 2, wherein the fibers include unidirectional carbon fibers.

4. The blade of claim 1, 2 or 3, wherein the shell fibrous material comprises dry fibers.

5. The blade of any preceding claim, further comprising a filler material (22) within the shell and forming a core encasing the one or more structural beams,

6. The blade of claim 5, wherein the filler material is a foam material, and optionally wherein the foam material is a polyurethane material.

7. The blade of any preceding claim, wherein the one or more beams comprise a U-shaped beam.

8. The blade of any preceding claim, further comprising a root insert (24) at a root end of the blade.

9. The blade of claim 8, comprising a sleeve (26) around the root insert.

10. The blade of any preceding claim being a rotary blade for a flying vehicle.

11. A method of forming a rotary blade, the method comprising:
forming one or more structural beams of the blade made of a thermoplastic material;
combining the one or more beams, with a core of filler material to produce an assembly;
applying a fibre shell over the assembly; and
performing Resin Transfer Molding, RTM, on the assembly in the fiber shell, wherein the RTM includes injecting a thermoset resin into the shell and the assembly and solidifying the resin, to strengthen the shell and also to create a bonding between the shell and the one or more beams, to produce the finished aircraft blade.

12. The method of claim 11, further comprising performing a surface treatment on the one or more beams to increase adhesion with the resin.

13. The method according to claim 11 or 12, wherein the one or more beams are two beams that are joined together at a curved base portion.

14. The method of any of claims 11 to 13, further comprising a retention sleeve at a root end of the blade.

15. The method according to any of claims 11 to 14, wherein the step of combining comprises:
placing the one or more beams, into a mold, the mold having substantially the shape of the finished aircraft blade;
injecting a liquid filler material into the mold; and
solidifying the filler material to form the core.

## Patentansprüche

1. Rotorblatt, wobei das Blatt einen oder mehrere Strukturträger (14, 16), die sich im Allgemeinen in eine Richtung von einem Wurzelende des Blatts zu einer Spitze des Blatts erstrecken, eine Hülle (12), die den einen oder die mehreren Strukturträger umschließt und die äußere Form des Blatts definiert, umfasst, wobei der eine oder die mehreren Strukturträger aus einem thermoplastischen Material hergestellt sind und die Hülle ein Fasermaterial umfasst, wobei das Blatt ferner ein in das Fasermaterial der Hülle eingespritztes Duroplastharz umfasst, um die Hülle zu verstärken und außerdem um die Hülle mit dem einen oder den mehreren Trägern zu binden.

2. Blatt nach Anspruch 1, wobei der eine oder die mehreren Träger einen faserverstärkten Verbundwerkstoff umfassen, einschließlich eines thermoplastischen Materials und verstärkenden Fasern.

3. Blatt nach Anspruch 2, wobei die Fasern unidirektionale Kohlenstofffasern einschließen.

4. Blatt nach Anspruch 1, 2 oder 3, wobei das Fasermaterial der Hülle trockene Fasern umfasst.

5. Blatt nach einem der vorhergehenden Ansprüche, das ferner ein Füllmaterial (22) innerhalb der Hülle umfasst und einen Kern ausbildet, der den einen oder die mehreren Strukturträger umhüllt.

6. Blatt nach Anspruch 5, wobei das Füllmaterial ein Schaumstoffmaterial ist, und wobei das Schaumstoffmaterial optional ein Polyurethanmaterial ist.

7. Blatt nach einem der vorhergehenden Ansprüche, wobei der eine oder die mehreren Träger einen U-förmigen Träger umfassen.

8. Blatt nach einem der vorhergehenden Ansprüche, ferner umfassend einen Wurzeleinsatz (24) an einem Wurzelende des Blatts.

9. Blatt nach Anspruch 8, umfassend eine Hülse (26) um den Wurzeleinsatz herum.

10. Blatt nach einem der vorhergehenden Ansprüche, das ein Rotorblatt für ein Flugfahrzeug ist.

11. Verfahren zum Ausbilden eines Rotorblatts, wobei das Verfahren Folgendes umfasst:
Ausbilden eines oder mehrerer Strukturträger des Blatts, die aus einem thermoplastischen Material hergestellt sind;
Kombinieren des einen oder der mehreren Träger mit einem Kern aus Füllmaterial, um eine Baugruppe zu produzieren;
Aufbringen einer Faserhülle über die Baugruppe; und
Durchführen von Harzspritzpressen, RTM, an der Baugruppe in der Faserhülle, wobei das RTM Einspritzen eines Duroplastharzes in die Hülle und die Baugruppe und Verfestigen des Harzes einschließt, um die Hülle zu verstärken und außerdem eine Bindung zwischen der Hülle und dem einen oder den mehreren Trägern zu schaffen, um das fertige Luftfahrzeugblatt zu produzieren.

12. Verfahren nach Anspruch 11, ferner umfassend Durchführen einer Oberflächenbehandlung an dem einen oder den mehreren Trägern, um Haftung mit dem Harz zu erhöhen.

13. Verfahren nach Anspruch 11 oder 12, wobei der eine oder die mehreren Träger zwei Träger sind, die an einem gekrümmten Basisabschnitt miteinander verbunden sind.

14. Verfahren nach einem der Ansprüche 11 bis 13, ferner umfassend eine Haltehülse an einem Wurzelende des Blatts.

15. Verfahren nach einem der Ansprüche 11 bis 14, wobei der Schritt des Kombinierens Folgendes umfasst:
Platzieren des einen oder der mehreren Träger in einer Form, wobei die Form im Wesentlichen die Form des fertigen Luftfahrzeugblatts aufweist;
Einspritzen eines flüssigen Füllmaterials in die Form; und
Verfestigen des Füllmaterials, um den Kern auszubilden.

## Revendications

1. Lame rotative, la lame comprenant une ou plusieurs poutres structurelles (14, 16) s'étendant généralement dans une direction d'une extrémité d'emplanture de la lame à la pointe de la lame, une coque (12) enveloppant la une ou les plusieurs poutres structurelles et définissant la forme extérieure de la lame, dans laquelle la une ou les plusieurs poutres structurelles sont faites d'un matériau thermoplastique et la coque comprend un matériau fibreux, la lame comprenant en outre une résine thermodurcissable injectée dans le matériau fibreux de coque pour renforcer la coque et également pour lier la coque à la une ou aux plusieurs poutres.

2. Lame selon la revendication 1, dans laquelle la une ou les plusieurs poutres comprennent un composite renforcé de fibres comportant un matériau thermoplastique et des fibres de renforcement.

3. Lame selon la revendication 2, dans laquelle les fibres comportent des fibres de carbone unidirectionnelles.

4. Lame selon la revendication 1, 2 ou 3, dans laquelle le matériau fibreux de coque comprend des fibres sèches.

5. Lame selon une quelconque revendication précédente, comprenant en outre un matériau de remplissage (22) à l'intérieur de la coque et formant un noyau enrobant la une ou les plusieurs poutres structurelles.

6. Lame selon la revendication 5, dans laquelle le matériau de remplissage est un matériau en mousse, et éventuellement dans laquelle le matériau en mousse est un matériau polyuréthane.

7. Lame selon une quelconque revendication précédente, dans laquelle la une ou les plusieurs poutres comprennent une poutre en forme de U.

8. Lame selon une quelconque revendication précédente, comprenant en outre un insert d'emplanture (24) au niveau d'une extrémité d'emplanture de la lame.

9. Lame selon la revendication 8, comprenant un manchon (26) autour de l'insert d'emplanture.

10. Lame selon une quelconque revendication précédente étant une lame rotative pour véhicule volant.

11. Procédé de formation d'une lame rotative, le procédé comprenant :
la formation d'une ou de plusieurs poutres structurelles de la lame en matériau thermoplastique ;
la combinaison de la une ou des plusieurs poutres, avec un noyau de matériau de remplissage pour produire un assemblage ;
l'application d'une enveloppe en fibre sur l'assemblage ; et
la réalisation d'un moulage par transfert de résine (RTM) sur l'assemblage dans la coque en fibre, dans lequel le RTM comporte l'injection d'une résine thermodurcissable dans la coque et l'assemblage et la solidification de la résine, afin de renforcer la coque et également de créer une liaison entre la coque et la une ou les plusieurs poutres, afin de produire la lame d'aéronef finie.

12. Procédé selon la revendication 11, comprenant en outre la réalisation d'un traitement de surface sur la une ou les plusieurs poutres afin d'augmenter l'adhérence avec la résine.

13. Procédé selon la revendication 11 ou la revendication 12, dans lequel la une ou les plusieurs poutres sont deux poutres qui sont jointes ensemble au niveau d'une partie de base incurvée.

14. Procédé selon l'une quelconque des revendications 11 à 13, comprenant en outre un manchon de retenue au niveau d'une extrémité d'emplanture de la lame.

15. Procédé selon l'une quelconque des revendications 11 à 14, dans lequel l'étape de combinaison comprend :
le placement de la une ou des plusieurs poutres dans un moule, le moule présentant sensiblement la forme de la lame d'aéronef finie ;
l'injection d'un matériau de remplissage liquide dans le moule ; et
la solidification du matériau de remplissage pour former le noyau.
